# EUROPÄISCHE PATENTANMELDUNG

(11) **EP 2 110 723 A1**
(43) Veröffentlichungstag der Anmeldung: **21.10.2009**
(21) Anmeldenummer: 09003745.8
(22) Anmeldetag: 11.02.2009
(51) Int. Cl.: G05B 19/408

(54) **Verfahren zur Datenübertragung zwischen CNC-Steuerungen**

(30) Priorität: 11.02.2008 DE 102008008646
(71) Anmelder: Robert Bosch GmbH, 70469 Stuttgart (DE)
(72) Erfinder: Ait Yacine, Abderrahim, 64720 Michelstadt (DE)
(74) Vertreter: Thürer, Andreas

(57) **Zusammenfassung**

Die vorliegende Erfindung betrifft eine CNC-Steuerung (100, 200) für eine Werkzeugmaschine mit einer Schreib- und Leseeinrichtung (110, 210) für eine Wechselspeichereinrichtung (120) zum Abspeichern und Einlesen von Maschinendaten, wobei die Schreib- und Leseeinrichtung (110, 210) mit einer wechselspeichereinrichtung (120) beaufschlagbar ist, wobei die CNC-Steuerung dazu eingerichtet ist, Maschinendaten auf eine an der Schreib- und Leseeinrichtung (110, 210) angeschlossene Wechselspeichereinrichtung (120) oder von an der Schreib- und Leseeinrichtung (110, 210) angeschlossenen Wechselspeichereinrichtung (120) zu übertragen, sowie ein Verfahren zur Datenübertragung zwischen einer CNC-Steuerung (100, 200) für eine Werkzeugmaschine und einer Wechselspeichereinrichtung (120).

## Beschreibung

### Beschreibung

Die vorliegende Erfindung betrifft eine CNC-Steuerung für Werkzeugmaschinen, ein Verfahren zur Datenübertragung zwischen einer CNC-Steuerung für eine Werkzeugmaschine und einer Wechselspeichereinrichtung, ein entsprechendes Computerprogramm sowie ein entsprechendes Computerprogrammprodukt.

### Stand der Technik

Die Einstellung bzw. Parametrierung einer CNC-Steuerung nimmt auch heute noch eine wesentliche Zeitdauer in Anspruch. Zur Inbetriebnahme einer CNC-Steuerung muss diese programmiert und parametriert werden, wobei Maschinenparameter, Antriebsparameter, Dateien in einem RAM, Dateien in einem ROM, Werkzeugtabellen, Systemdaten, CPL- bzw. SPS Variablen usw. programmiert und eingestellt werden müssen. Es ist im Stand der Technik insbesondere problematisch, einmal vorgenommene Einstellungen für spätere Produktionswiederholungen zu archivieren oder auf andere CNC-Steuerungen zu übertragen.

Zum einen ist es heutzutage nicht möglich, alle der soeben genannten Maschinendaten zu übertragen, zum anderen ist für die Archivierung und spätere Rücksicherung der Anschluss eines entsprechend vorbereiteten PCs an die CNC-Steuerung notwendig. Für die Datenübertragung ist eine hohe Fachkenntnis des Bedieners nötig, der sich der Kompatibilitätsanforderungen verschiedener CNC-Steuerungen sowie verschiedener Dateiarchive bewusst sein muss. Der Bediener muss manuell die abzuspeichernden Daten auswählen und diese auf herkömmliche Weise in einzelnen Dateien abspeichern.

Vor diesem Hintergrund werden mit der vorliegenden Erfindung eine CNC-Steuerung für Werkzeugmaschinen, ein Verfahren zur Datenübertragung zwischen einer CNC-Steuerung für eine Werkzeugmaschine und einer Wechselspeichereinrichtung, ein entsprechendes Computerprogramm sowie ein entsprechendes Computerprogrammprodukt mit den Merkmalen der unabhängigen Patentansprüche vorgestellt. Vorteilhafte Ausgestaltungen sind Gegenstand der Unteransprüche sowie der nachfolgenden Beschreibung.

### Vorteile der Erfindung

Die vorliegende Erfindung schafft die Möglichkeit, auf einfache und insbesondere benutzerfreundliche Weise Daten einer CNC-Steuerung zu archivieren oder auf andere CNC-Steuerungen zu übertragen, insbesondere fertig konfigurieret CNC-Steuerungen zu "klonen". Mit der erfindungsgemäßen Lösung kann eine Archivierung bzw. Datenübertragung auf einfache Weise mittels Wechselspeichereinrichtungen bzw. -medien erfolgen, wobei die Bereitstellung speziell eingerichteter Computersysteme nicht notwendig ist. Durch das Abspeichern der Maschinendaten auf Wechselspeichereinrichtungen werden Fehlerquellen bei der Datenübertragung reduziert. Vorteilhafterweise ist es möglich, automatisch komplette Sätze bzw. Archive von Maschinendaten auf der Wechselspeichereinrichtung zu erzeugen, die aufgrund der Vollständigkeit der Daten zu vielen anderen CNC-Steuerungen kompatibel ist.

Die CNC-Steuerung ist bevorzugterweise so eingerichtet, dass nach Freigabe durch den Benutzer automatisch ein kompletter Satz von Maschinendaten, der ausreichend ist, um eine Maschinenkonfiguration bereitzustellen, auf der Wechselspeichereinrichtung abgespeichert wird. Ebenso ist die CNC-Steuerung bevorzugterweise so eingerichtet, dass nach Freigabe durch den Benutzer automatisch ein kompletter Satz von Maschinendaten, der ausreichend ist, um eine Maschinenkonfiguration bereitzustellen, von der Wechselspeichereinrichtung geladen wird.

Vorteilhafterweise wird ein entsprechendes Schnittstellenprotokoll vorgeschlagen, das erfindungsgemäße CNC-Steuerungen in die Lage versetzt, Archive bzw. Speicherdateien von allen Maschinendaten zu erzeugen, die für einen Betrieb und eine kompatible Datenübertragung an andere CNC-Steuerungen notwendig sind.

Besonders vorteilhaft ist die Schreib- und Leseeinrichtung als USB-Schnittstelle ausgebildet. Es handelt sich hierbei um eine standardisierte Schnittstelle, die darüber hinaus besonders robust und zuverlässig ist. Des weiteren existiert bereits eine Vielzahl von Wechselmedien für die USB-Schnittstelle.

Zweckmäßigerweise ist die Wechselspeichereinrichtung als Flash-Speicher mit einer USB-Schnittstelle, insbesondere als sog. USB-Stick, ausgebildet. Flash-Speicher sind ebenfalls besonders robust, zuverlässig und langlebig und können daher für eine Werkstattumgebung besonders geeignet. Es versteht sich, dass ebenso bspw. sog. externe Festplatten mit USB-Schnittstelle o.ä. verwendet werden können.

Es bietet sich an, die Maschinendaten in einer TAR-Datei auf der Wechselspeichereinrichtung abzulegen. TAR bietet die Möglichkeit, Dateien sequentiell in eine einzige Datei zu schreiben bzw. Dateien aus selbiger wieder herzustellen, was sich für den erfindungsgemäßen Einsatzzweck besonders eignet.

Zweckmäßigerweise umfassen die Maschinendaten Maschinenparameter, Antriebsparameter, Dateien in einem RAM-Filesystem, Dateien in einem User-EEPROM, Werkzeugtabellen, Systemdaten und/oder permanente SPS-Variablen, insbesondere alle Daten, die für eine vollständige Parametrierung einer CNC-Steuerung notwendig sind.

Die Erfindung betrifft zudem ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere einer erfindungsgemäßen CNC-Steuerung, ausgeführt wird.

Das erfindungsgemäß vorgesehene Computerprogrammprodukt mit Programmcodemitteln, die auf einem computerlesbaren Datenträger gespeichert sind, ist zum Durchführen aller Schritte eines Verfahrens ausgebildet, wenn das Computerprogramm auf einem Computer oder einer entsprechenden Recheneinheit, insbesondere einer erfindungsgemäßen CNC-Steuerung, ausgeführt wird. Geeignete Datenträger sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

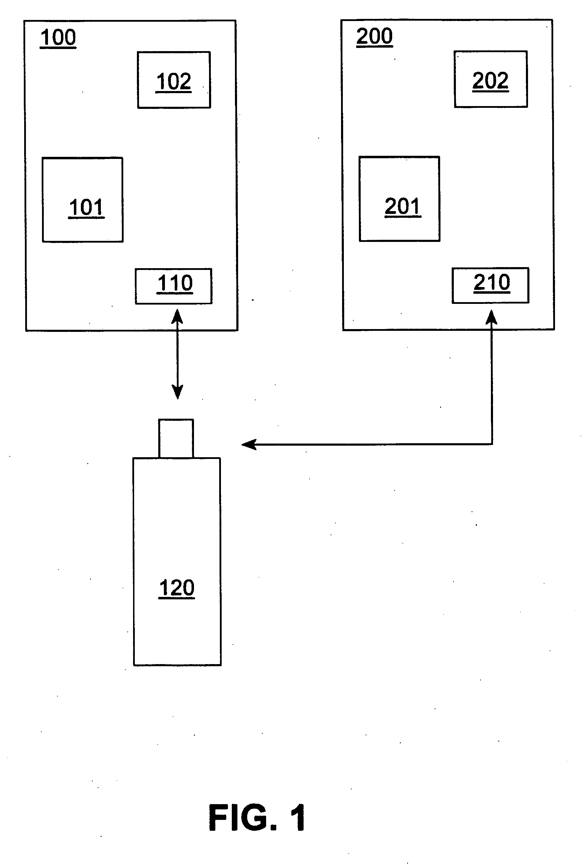

- Figur 1: zeigt eine schematische Darstellung einer bevorzugten Ausgestaltung einer erfindungsgemäßen CNC-Steuerung.

In Figur 1 ist eine bevorzugte Ausgestaltung einer erfindungsgemäßen CNC-Steuerung für Werkzeugmaschinen insgesamt mit 100 bezeichnet. Die CNC-Steuerung 100 weist eine als USB-Schnittstelle 110 ausgebildete Lese- und Speichereinrichtung für Wechselmedien auf. Als Wechselmedien werden bei der bevorzugten CNC-Steuerung 100 Flash-Speichermedien mit USB-Schnittstelle, insbesondere sogenannte USB-Sticks, verwendet. Die SPS-Steuerung 100 weist weiterhin einen Speicher 102 sowie eine Verarbeitungseinheit bzw. CPU 101 auf.

Bei einer bevorzugten Ausgestaltung des erfindungsgemäßen Verfahrens wird ein USB-Stick 120 in die USB-Schnittstelle 110 eingeführt. Die CNC-Steuerung 100 erkennt den angeschlossenen USB-Stick 120 als Wechselspeichereinrichtung und bietet dem Anwender, beispielsweise per HMI, die Möglichkeit, Maschinendaten in eine Archivdatei auf den USB-Stick 120 zu speichern. Vorzugsweise werden bei der Speicherung Maschinendaten umfassend Maschinenparameter, Antriebsparameter, Dateien in einem RAM-Filesystem, Dateien in einem User-EEPOM, Werkzeugtabellen, Systemdaten und/oder permanente SPS-Variablen in eine Archivdatei, vorzugsweise in komprimierter Form, gespeichert. Als Dateiformat kann beispielsweise ein TAR-Format verwendet werden.

Nach der Speicherung kann der Benutzer den USB-Stick 120 wieder aus der USB-Schnittstelle 110 entfernen. Die auf dem USB-Stick gespeicherten Maschinendaten können nun dazu verwendet werden, andere CNC-Steuerungen entsprechend der CNC-Steuerung 100 zu konfigurieren. Dafür wird der USB-Stick 120 in eine USB-Schnittstelle 210 einer zweiten CNC-Steuerung 200 eingeführt. Die SPS-Steuerung weist ebenfalls eine Speichereinrichtung 202 sowie eine CPU 201 auf.

Die zweite CNC-Steuerung 200 erkennt den angeschlossenen USB-Stick 120 und bietet dem Anwender die Möglichkeit, beispielsweise erneut per HMI, die auf dem USB-Stick 120 gespeicherten Daten einzulesen. Beim Einlesen der auf dem USB-Stick 120 gespeicherten Daten führt die zweite SPS-Steuerung 200 vorzugsweise folgende Schritte durch.

Zunächst wird die auf dem USB-Stick 120 gespeicherte Datei, beispielsweise eine TAR-Datei in einen Speicher 202 der SPS-Steuerung 200 eingelesen. Anschließend wird die sich nun im Speicher 202 befindende Datei ggf. extrahiert, wodurch die Maschinendaten in einer direkt lesbaren Form vorliegen. Anschließend führt die CNC-Steuerung 200 eine. Kompatibilitätsüberprüfung der Maschinendaten durch, um Sicherzustellen, dass die Maschinendaten für die CNC-Steuerung 200 geeignet sind. Schließlich werden die Maschinendaten in die zugehörigen Speicherbereiche eingeschrieben, um für den Betrieb der CNC-Steuerung 200 bereitzustehen.

Analog dem soeben unter Bezugnahme auf eine zweite SPS-Steuerung 200 beschriebenen Datenübertragungsverfahren ist es möglich, die auf dem USB-Stick 120 gespeicherten Daten zu einem späteren Zeitpunkt in die CNC-Steuerung 120 zurückzuführen. Bei dieser Verwendung dient der USB-Stick 120 als (Langzeit-)Speichereinrichtung, um einmalig konfigurierte Maschinendaten zu einem späteren Zeitpunkt erneut zur Verfügung zu haben.

Mit der beschriebenen erfindungsgemäßen Lösung ist es möglich, CNC-Steuerungen schnell und benutzerfreundlich zu konfigurieren bzw. umzukonfigurieren.

Es versteht sich, dass in den dargestellten Figuren nur eine besonders bevorzugte Ausführungsform der Erfindung dargestellt ist. Daneben ist jede andere Ausführungsform denkbar, ohne den Rahmen dieser Erfindung zu verlassen.

### Bezugszeichenliste

- 10: schematische Darstellung der Datenübertragung im Stand der Technik
- 11: x-Achse t
- 12, 13: Datentelegramm
- 20, 30: schematische Darstellung einer erfindungsgemäßen Datenübertragung
- 22, 33: Datentelegramm
- CH1: Echtzeit-Datenübertragungskanal
- CH2: Nicht-Echtzeit-Datenübertragungskanal

- 100: SPS-Steuerung
- 101: CPU
- 102: Speicher
- 110: USB-Schnittstelle
- 120: USB-Stick
- 200: SPS-Steuerung
- 201: CPU
- 202: Speicher
- 210: USB-Schnittstelle

## Patentansprüche

1. CNC-Steuerung (100, 200) für eine Werkzeugmaschine mit einer Schreib- und Leseeinrichtung (110, 210) für eine Wechselspeichereinrichtung (120) zum Abspeichern und Einlesen von Maschinendaten,
wobei die Schreib- und Leseeinrichtung (110, 210) mit einer Wechselspeichereinrichtung (120) beaufschlagbar ist,
wobei die CNC-Steuerung dazu eingerichtet ist, Maschinendaten auf eine an der Schreib- und Leseeinrichtung (110, 210) angeschlossene Wechselspeichereinrichtung (120) oder von an der Schreib- und Leseeinrichtung (110, 210) angeschlossenen Wechselspeichereinrichtung (120) zu übertragen.

2. CNC-Steuerung nach Anspruch 1, wobei die Schreib- und Leseeinrichtung als USB-Schnittstelle (110, 210) ausgebildet ist.

3. CNC-Steuerung nach Anspruch 2, wobei die Wechselspeichereinrichtung (120) als Flash-Speicher mit einer USB-Schnittstelle ausgebildet ist.

4. Verfahren zur Datenübertragung zwischen einer CNC-Steuerung (100, 200) für eine Werkzeugmaschine und einer Wechselspeichereinrichtung (120), wobei
die Wechselspeichereinrichtung (120) an eine Schreib-und Leseeinrichtung (110, 210) der CNC-Steuerung (100, 200) angeschlossen wird,
Maschinendaten von der CNC-Steuerung (100, 200) an die Wechselspeichereinrichtung (120) oder von der Wechselspeichereinrichtung (120) in die CNC-Steuerung (100, 200) übertragen werden.

5. Verfahren nach Anspruch 4, wobei die Wechselspeichereinrichtung (120) als Flash-Speicher mit einer USB-Schnittstelle ausgebildet wird.

6. Verfahren nach Anspruch 4 oder 5, wobei die Maschinendaten in einer TAR-Datei auf der Wechselspeichereinrichtung abgelegt sind.

7. Verfahren nach Anspruch 4, 5 oder 6, wobei die Maschinendaten Maschinenparameter, Antriebsparameter, Dateien in einem RAM-Filesystem, Dateien in einem User-EEPROM, Werkzeugtabellen, Systemdaten und/oder permanente SPS-Variablen umfassen.

8. Computerprogramm mit Programmcodemitteln, um alle Schritte eines Verfahrens nach einem der Ansprüche 4 bis 7 durchzuführen, wenn das Computerprogramm auf einem Computer oder einer entsprechenden Recheneinheit, insbesondere einer CNC-Steuerung (100, 200) nach einem der Ansprüche 1 bis 3, ausgeführt wird.

9. Computerprogrammprodukt mit Programmcodemitteln, die auf einem computerlesbaren Datenträger gespeichert sind, um alle Schritte eines Verfahrens nach einem der Ansprüche 4 bis 7 durchzuführen, wenn das Computerprogramm auf einem Computer oder einer entsprechenden Recheneinheit, insbesondere einer CNC-Steuerung (100, 200) nach einem der Ansprüche 1 bis 3, ausgeführt wird.
